# EUROPEAN PATENT SPECIFICATION

(11) **EP 3 216 739 B1**
(45) Date of publication and mention of the grant of the patent: **07.10.2020**
(21) Application number: 17159979.8
(22) Date of filing: 09.03.2017
(51) Int. Cl.: B66B 5/22, F16F 1/18

(54) **ELEVATOR SAFETY SPRING AND METHOD OF MANUFACTURING**
AUFZUGSSICHERHEITSFEDER UND VERFAHREN ZUR HERSTELLUNG
RESSORT DE SÉCURITÉ D'ASCENSEUR ET PROCÉDÉ DE FABRICATION

(30) Priority: 11.03.2016 US 201662306934 P
(43) Date of publication of application: 13.09.2017
(73) Proprietor: Otis Elevator Company, Farmington CT 06032 (US)
(72) Inventor: CHEN, Shihemn, East Hartford, CT Connecticut 06108 (US); LIOU, Joe J., South Windsor, CT Connecticut 06074 (US); KUCZEK, Andrzej Ernest, East Hartford, CT Connecticut 06108 (US); EL-WARDANY, Tahany Ibrahim, East Hartford, CT Connecticut 06108 (US); LUO, Xiaodong, East Hartford, CT Connecticut 06108 (US); POLAK, David R., East Hartford, CT Connecticut 06108 (US); DRAPER, James M, Farmington, CT Connecticut 06032 (US); KRISS, John J., Farmington, CT Connecticut 06032 (US); LIANG, Duan, Farmington, CT Connecticut 06032 (US); O'COIN, Patricia L, Farmington, CT Connecticut 06032 (US); DESAI, Aayush, Farmington, CT Connecticut 06032 (US)
(74) Representative: Dehns

(56) References cited:
- JP-A- H1 111 818
- JP-A- 2000 302 351
- US-A1- 2003 085 085

## Description

### BACKGROUND OF THE DISCLOSURE

The embodiments herein generally relate to elevator safeties and, more particularly, to an elevator safety spring and methods of manufacturing elevator safety springs.

Elevator safety spring designs typically depend on the load on the safety and the maximum required deflection. Therefore, there is a need to use different spring size and thickness depending on the specific application. Commonly, safety springs have a substantially rectangular cross-section that is heated and bent to a desired geometry. When the thickness of the spring wall exceeds a certain dimension, the price of the material and increased tonnage of the forming equipment significantly increase the spring cost. Based on the number of different potential spring sizes and the bending manufacturing methods employed, numerous cumbersome steps and tools are associated with the manufacturing of the safety springs.

US 2003/085085 A1 discloses a braking device that acts on a guiderail. The braking device includes: a housing; a pair of brake chocks mounted on the housing; and at least one spring packet mounted on the housing.

### BRIEF DESCRIPTION OF THE DISCLOSURE

According to a first aspect of the invention, a method of manufacturing an elevator safety spring is provided. The method includes determining a plurality of dimensional parameters of the elevator safety spring. The method also includes selecting a plurality of dimensions within the dimensional parameters. The method further includes manufacturing the elevator safety spring based on the selected parameters, the elevator safety spring having an I-beam cross-section.

In addition to one or more of the features described above, or as an alternative, further embodiments may include that manufacturing the elevator safety spring comprises forming the elevator safety spring with a die forging process.

In addition to one or more of the features described above, or as an alternative, further embodiments may include that manufacturing the elevator safety spring comprises an additive manufacturing process.

In addition to one or more of the features described above, or as an alternative, further embodiments may include that the additive manufacturing process comprises electron beam wire additive manufacturing.

In addition to one or more of the features described above, or as an alternative, further embodiments may include that the selected plurality of dimensions are optimized to provide predetermined spring characteristics of the elevator safety spring.

In addition to one or more of the features described above, or as an alternative, further embodiments may include that the predetermined spring characteristics are determined by a maximum load on a safety and a corresponding normal load applied to the elevator safety spring.

In addition to one or more of the features described above, or as an alternative, further embodiments may include that manufacturing the elevator safety spring comprises forming a single, unitary structure.

In addition to one or more of the features described above, or as an alternative, further embodiments may include that determining the plurality of dimensional parameters comprises performing a topology optimization analysis.

According to a second aspect of the invention, an elevator safety spring includes an I-beam cross-section having a plurality of variable dimensional parameters corresponding to a plurality of spring characteristics.

In addition to one or more of the features described above, or as an alternative, further embodiments may include that the elevator safety spring is a single, unitary structure.

In addition to one or more of the features described above, or as an alternative, further embodiments may include that the elevator safety spring is manufactured with an additive manufacturing process.

In addition to one or more of the features described above, or as an alternative, further embodiments may include that the additive manufacturing process comprises an electron beam wire additive manufacturing process.

In addition to one or more of the features described above, or as an alternative, further embodiments may include that the elevator safety spring is manufactured with a die forging process.

### BRIEF DESCRIPTION OF THE DRAWINGS

The subject matter which is regarded as the disclosure is particularly pointed out and distinctly claimed in the claims at the conclusion of the specification. The foregoing and other features and advantages of the disclosure are apparent from the following detailed description taken in conjunction with the accompanying drawings in which:
FIG. 1 is a perspective view of an elevator safety with an elevator safety spring associated therewith;
FIG. 2 is a perspective view of the elevator safety spring;
FIG. 3 is a perspective, cross-sectional view of the elevator safety spring;
FIG. 4 is an elevational, cross-sectional view of the elevator safety spring; and
FIG. 5 is an elevational, cross-sectional view of the elevator safety spring according to another aspect of the disclosure.

### DETAILED DESCRIPTION OF THE DISCLOSURE

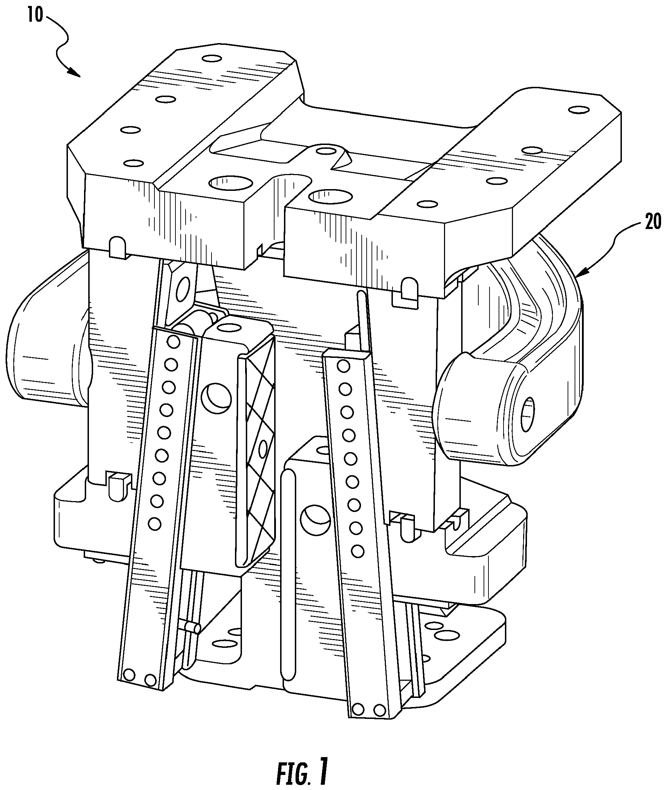

Referring to FIG. 1, an elevator safety 10 is illustrated with an elevator safety spring 20 associated therewith. The elevator safety 10 is actuated upon detection of an overspeed condition of an elevator car. Actuation of the elevator safety 10 results in gripping of a guide rail within a hoistway, with an increasing frictional force associated with such gripping sufficient to stop the elevator.

The elevator safety spring 20 is to provide a predetermined force that pushes safety wedges against the guide rail when the elevator safety 10 is fully engaged. This contact force generates frictional force to slow down the elevator at a desired deceleration rate.

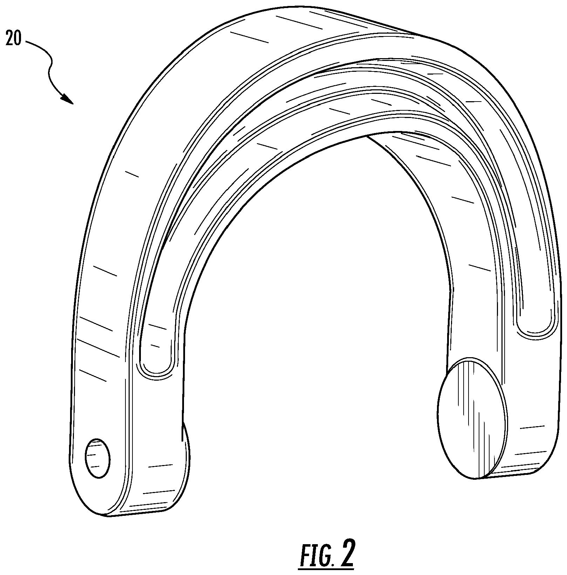

Referring now to FIG. 2, the elevator safety spring 20 is illustrated in greater detail. The elevator safety spring 20 has a generally U- shaped or C-shaped geometry. The elevator safety spring 20 is a single, unitary structure formed with a single manufacturing tool and/or setup. In some embodiments, the elevator safety spring 20 is formed of advanced high strength steel.

In one embodiment, a die forging manufacturing process is employed to form the elevator safety spring 20. In another embodiment, an additive manufacturing process is employed to form the elevator safety spring 20. An example of an additive manufacturing process is electron beam wire additive manufacturing or wire arc additive manufacturing (WAAM). The methods described above are merely illustrative and are not limiting of other suitable manufacturing processes.

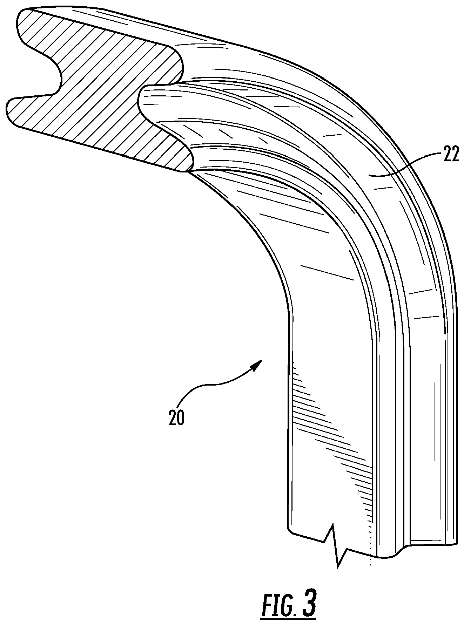

Referring to FIGS. 3-5, various portions of a spring body 22 are illustrated. The spring body 22 has a cross-sectional geometry substantially corresponding to an I-beam. The I-beam cross-section significantly reduces weight when compared to a substantially rectangular cross-sectioned safety spring.

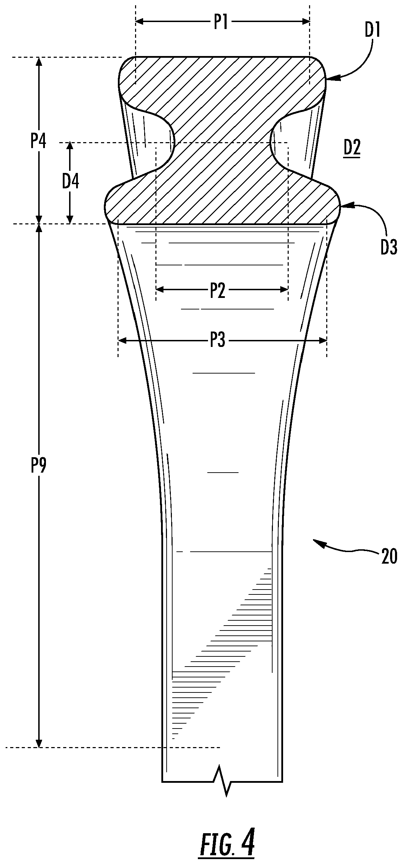

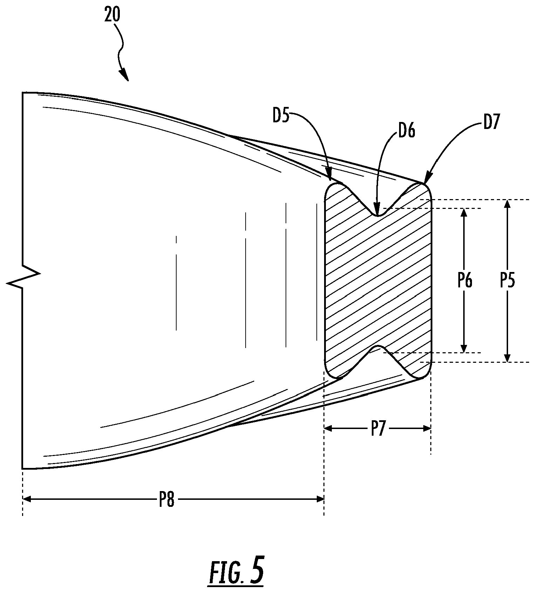

A method of manufacturing the elevator safety spring 20 is provided and includes a topology optimization analysis used to define a plurality of dimensional parameters of the elevator safety spring 20. The dimensional parameters may be varied to achieve a required spring deformation and to minimize the stresses on the elevator safety spring 20 to satisfy design requirements. The number of dimensional parameters may vary depending upon the particular application. In the illustrated embodiment shown in FIGS. 4 and 5, certain parameters are specifically referenced. In particular, various lengths and radii associated with the overall I-beam geometry have been determined to vary the spring characteristics in a predictable and analyzable manner. In some embodiments, the spring characteristics are determined by a maximum load on a safety and a corresponding normal load applied to the elevator safety spring 20. In the illustrated embodiment, 16 dimensional parameters have been shown, including six radii and ten lengths. It is to be understood that some or all of the illustrated dimensional parameters may be utilized in an optimization analysis.

In the illustrated embodiment, the parametric safety spring model is shown. Parameters P1-P9 are independent dimensional parameters comprising lengths and radii. P8 is determined by the safety loading locations and P9 is selected to avoid the interference between the spring and the safety block. P1-P7 are selected to meet other targets. D1-D7 are dependent dimensional parameters which are determined by the values of P1-P9.

Determining the dimensional parameters of the elevator safety spring 20 to be modified provides flexibility with respect to safety spring designs in a wide variety of applications. By unifying the elevator safety spring design and dimension, beneficial reductions in costs associated with tooling, fabrication and amortization are attained. This is based on elimination of the need for more than one tool or one setup. The use of an I-beam cross-section reduces the weight of the elevator safety spring, thereby enabling a reduced need and cost for ropes, counterweights and machine power required for overall operation of an elevator.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the disclosure. Additionally, while various embodiments of the disclosure have been described, it is to be understood that aspects of the disclosure may include only some of the described embodiments. Accordingly, the disclosure is not to be seen as limited by the foregoing description, but is only limited by the scope of the appended claims.

## Claims

1. A method of manufacturing an elevator safety spring (20) **characterised in that** it comprises:
determining a plurality of dimensional parameters (P1-P7, D1-D7) of the elevator safety spring (20);
selecting a plurality of dimensions within the dimensional parameters (P1-P7, D1-D7); and
manufacturing the elevator safety spring based on the selected parameters, the elevator safety spring (20) having an I-beam cross-section.

2. The method of claim 1, wherein manufacturing the elevator safety spring (20) comprises forming the elevator safety spring (20) with a die forging process.

3. The method of claim 1, wherein manufacturing the elevator safety spring (20) comprises an additive manufacturing process.

4. The method of claim 3, wherein the additive manufacturing process comprises electron beam wire additive manufacturing.

5. The method of any of the preceding claims, wherein the selected plurality of dimensions are optimized to provide predetermined spring characteristics of the elevator safety spring (20).

6. The method of claim 5, wherein the predetermined spring characteristics are determined by a maximum load on a safety (10) and a corresponding normal load applied to the elevator safety spring (20).

7. The method of any of the preceding claims, wherein manufacturing the elevator safety spring (20) comprises forming a single, unitary structure.

8. The method of any of the preceding claims, wherein determining the plurality of dimensional parameters (P1-P7, D1-D7) comprises performing a topology optimization analysis.

9. An elevator safety spring (20) having a plurality of variable dimensional parameters (P1-P7, D1-D7) corresponding to a plurality of spring characteristics, **characterised in that** the elevator safety spring (20) comprises an I-beam cross-section.

10. The elevator safety spring (20) of claim 9, wherein the elevator safety spring (20) is a single, unitary structure.

11. The elevator safety spring (20) of claim 9 or 10, wherein the elevator safety spring (20) is manufactured with an additive manufacturing process.

12. The elevator safety spring (20) of claim 11, wherein the additive manufacturing process comprises an electron beam wire additive manufacturing process.

13. The elevator safety spring (20) of claim 9 or 10, wherein the elevator safety spring (20) is manufactured with a die forging process.

## Patentansprüche

1. Verfahren zur Herstellung einer Aufzugssicherheitsfeder (20), das **dadurch gekennzeichnet ist, dass** es Folgendes umfasst:
Bestimmen einer Vielzahl von Abmessungsparametern (P1-P7, D1-D7) der Aufzugssicherheitsfeder (20);
Auswählen einer Vielzahl von Abmessungen aus den Abmessungsparametern (P1-P7, D1-D7); und
Herstellen der Aufzugssicherheitsfeder auf Grundlage der ausgewählten Parameter, wobei die Aufzugssicherheitsfeder (20) einen I-Träger-Querschnitt aufweist.

2. Verfahren nach Anspruch 1, wobei die Herstellung der Aufzugssicherheitsfeder (20) das Bilden der Aufzugssicherheitsfeder (20) mit einem Gesenkschmiede-Prozess umfasst.

3. Verfahren nach Anspruch 1, wobei die Herstellung der Aufzugssicherheitsfeder (20) einen additiven Herstellungsprozess umfasst.

4. Verfahren nach Anspruch 3, wobei der additive Herstellungsprozess elektronenstrahlbasierte additive Herstellung mittels Drähten umfasst.

5. Verfahren nach einem der vorstehenden Ansprüche, wobei die ausgewählte Vielzahl von Abmessungen dazu optimiert ist, vorbestimmte Federeigenschaften der Aufzugssicherheitsfeder (20) bereitzustellen.

6. Verfahren nach Anspruch 5, wobei die vorbestimmten Federeigenschaften durch eine maximale Last auf eine Sicherheitsvorrichtung (10) und eine entsprechende normale Last, die auf die Aufzugssicherheitsfeder (20) wirkt, bestimmt werden.

7. Verfahren nach einem der vorstehenden Ansprüche, wobei die Herstellung der Aufzugssicherheitsfeder (20) das Bilden einer einzelnen einheitlichen Struktur umfasst.

8. Verfahren nach einem der vorstehenden Ansprüche, wobei das Bestimmen der Vielzahl von Abmessungsparametern (P1-P7, D1-D7) das Durchführen einer Topologieoptimierungsanalyse umfasst.

9. Aufzugssicherheitsfeder (20) mit einer Vielzahl von variablen Abmessungsparametern (P1-P7, D1-D7), die einer Vielzahl von Federeigenschaften entspricht, **dadurch gekennzeichnet, dass** die Aufzugssicherheitsfeder (20) einen I-Träger-Querschnitt umfasst.

10. Aufzugssicherheitsfeder (20) nach Anspruch 9, wobei die Aufzugssicherheitsfeder (20) eine einzelne einheitliche Struktur ist.

11. Aufzugssicherheitsfeder (20) nach Anspruch 9 oder 10, wobei die Aufzugssicherheitsfeder (20) mit einem additiven Herstellungsprozess hergestellt wird.

12. Aufzugssicherheitsfeder (20) nach Anspruch 11, wobei der additive Herstellungsprozess eine elektronenstrahlbasierte additive Herstellung mittels Drähten umfasst.

13. Aufzugssicherheitsfeder (20) nach Anspruch 9 oder 10, wobei die Aufzugssicherheitsfeder (20) mit einem Gesenkschmiede-Prozess hergestellt wird.

## Revendications

1. Procédé de fabrication d'un ressort de sécurité d'ascenseur (20) **caractérisé en ce qu'**il comprend :
la détermination d'une pluralité de paramètres dimensionnels (P1-P7, D1-D7) du ressort de sécurité d'ascenseur (20) ;
la sélection d'une pluralité de dimensions dans les paramètres dimensionnels (P1-P7, D1-D7) ; et
la fabrication du ressort de sécurité d'ascenseur sur la base des paramètres sélectionnés, le ressort de sécurité d'ascenseur (20) ayant un section transversale de faisceau I.

2. Procédé selon la revendication 1, dans lequel la fabrication du ressort de sécurité d'ascenseur (20) comprend la formation du ressort de sécurité d'ascenseur (20) avec un processus de forgeage en matrice.

3. Procédé selon la revendication 1, dans lequel la fabrication du ressort de sécurité d'ascenseur (20) comprend un processus de fabrication additive.

4. Procédé selon la revendication 3, dans lequel le processus de fabrication additive comprend une fabrication additive de fil par faisceau électronique.

5. Procédé selon l'une quelconque des revendications précédentes, dans lequel la pluralité de dimensions sélectionnées sont optimisées pour fournir des caractéristiques de ressort prédéterminées du ressort de sécurité d'ascenseur (20).

6. Procédé selon la revendication 5, dans lequel les caractéristiques de ressort prédéterminées sont déterminées par une charge maximale sur une sécurité (10) et une charge normale correspondante appliquée sur le ressort de sécurité d'ascenseur (20).

7. Procédé selon l'une quelconque des revendications précédentes, dans lequel la fabrication du ressort de sécurité d'ascenseur (20) comprend la formation d'une structure unitaire unique.

8. Procédé selon l'une quelconque des revendications précédentes, dans lequel la détermination de la pluralité de paramètres dimensionnels (P1-P7, D1-D7) comprend la réalisation d'une analyse d'optimisation topologique.

9. Ressort de sécurité d'ascenseur (20) ayant une pluralité de paramètres dimensionnels (P1-P7, D1-D7) variables correspondant à une pluralité de caractéristiques de ressort, **caractérisé en ce que** le ressort de sécurité d'ascenseur (20) comprend une section transversale de faisceau I.

10. Ressort de sécurité d'ascenseur (20) selon la revendication 9, dans lequel le ressort de sécurité d'ascenseur (20) est une structure unitaire unique.

11. Ressort de sécurité d'ascenseur (20) selon la revendication 9 ou 10, dans lequel le ressort de sécurité d'ascenseur (20) est fabriqué avec un processus de fabrication additive.

12. Ressort de sécurité d'ascenseur (20) selon la revendication 11, dans lequel le processus de fabrication additive comprend un processus de fabrication additive de fil par faisceau électronique.

13. Ressort de sécurité d'ascenseur (20) selon la revendication 9 ou 10, dans lequel le ressort de sécurité d'ascenseur (20) est fabriqué avec un processus de forgeage en matrice.
